# EUROPEAN PATENT APPLICATION

(11) **EP 4 498 007 A1**
(43) Date of publication of application: **29.01.2025**
(21) Application number: 23781101.3
(22) Date of filing: 31.03.2023
(51) Int. Cl.: F24F 1/12

(54) **REFRIGERATION CYCLE DEVICE**

(30) Priority: 31.03.2022 JP 2022059337
(71) Applicant: DAIKIN INDUSTRIES, LTD., Osaka-shi, Osaka 530-0001 (JP)
(72) Inventor: HISAYAMA, Kazushi, Osaka-shi, Osaka 530-0001 (JP); TSUMURA, Yoshinobu, Osaka-shi, Osaka 530-0001 (JP)
(74) Representative: Hoffmann Eitle
(86) International application number: PCT/JP2023/013690
(87) International publication number: WO 2023/191093

(57) **Abstract**

A support leg (31) of a compressor (30) is supported by a vibration isolating member (40). The vibration isolating member (40) is supported by a support member (50). A pipe (26) is connected to the compressor (30). The pipe (26) is provided with a rigid member (35). The rigid member (35) is supported by the support member (50).

## Description

### TECHNICAL FIELD

The present disclosure relates to a refrigeration cycle apparatus.

### BACKGROUND ART

Patent Document 1 discloses a vibration isolation structure of an air conditioner including a primary vibration isolator that supports a compressor on a stand in an antivibration manner and a secondary vibration isolator that supports the stand on a ground surface in an antivibration manner.

### CITATION LIST

### PATENT DOCUMENT

Patent Document 1: Japanese Unexamined Patent Publication No. 2003-232543

### SUMMARY OF THE INVENTION

### TECHNICAL PROBLEM

According to the invention of Patent Document 1, vibration generated by the compressor in operation is transmitted to the pipe, and the pipe vibrates greatly. This may disadvantageously generate vibration sound caused by the vibration of the pipe, making noise louder.

An object of the present disclosure is to reduce vibration sound caused by the vibration of a pipe.

### SOLUTION TO THE PROBLEM

A first aspect of the present disclosure is directed to a refrigeration cycle apparatus provided with a compressor (30) and a refrigerant circuit (2) to which the compressor (30) is connected. The refrigeration cycle apparatus includes: a vibration isolating member (40) configured to support the compressor (30); a support member (50) configured to support the vibration isolating member (40); and a rigid member (35) provided on a pipe (26) connected to the compressor (30). The rigid member (35) is supported by the support member (50).

In the first aspect, the rigid member (35) reduces the vibration transmitted from the compressor (30) to the pipe (26), reducing the vibration sound generated by the vibration of the pipe (26).

A second aspect of the present disclosure is an embodiment of the refrigeration cycle apparatus of the first aspect. In the second aspect, the refrigeration cycle apparatus further includes a first elastic member (36) configured to support the rigid member (35), and the first elastic member (36) is supported by the support member (50).

In the second aspect, the first elastic member (36) reduces, via the rigid member (35), the vibration transmitted from the compressor (30) to the pipe (26), reducing the transmission of the vibration to the support member (50).

A third aspect of the present disclosure is an embodiment of the refrigeration cycle apparatus of the first or second aspect. In the third aspect, the vibration isolating member (40) includes a first vibration isolating member (41) and a second vibration isolating member (42), the support member (50) includes a first support member (51) and a second support member (52), the compressor (30) is supported by the first vibration isolating member (41), the first vibration isolating member (41) is supported by the first support member (51), the first support member (51) is supported by the second vibration isolating member (42), the second vibration isolating member (42) is supported by the second support member (52), and the rigid member (35) is supported by the first support member (51) or the second support member (52).

In the third aspect, the compressor (30) is supported by a two-layer antivibration structure made by stacking the first vibration isolating member (41) and the second vibration isolating member (42), reducing the vibration transmitted from the compressor (30) to the support member (50) and the vibration transmitted from the compressor (30) to the pipe (26). This can reduce the vibration sound generated by the vibration of the support member (50) and the pipe (26).

A fourth aspect of the present disclosure is an embodiment of the refrigeration cycle apparatus of the third aspect. In the fourth aspect, the refrigeration cycle apparatus further includes a first elastic member (36) configured to support the rigid member (35), and the first elastic member (36) is supported by the first support member (51) or the second support member (52).

In the fourth aspect, the first elastic member (36) reduces, via the rigid member (35), the vibration transmitted from the compressor (30) to the pipe (26), reducing the transmission of the vibration to the first support member (51) or the second support member (52).

A fifth aspect of the present disclosure is an embodiment of the refrigeration cycle apparatus of the first aspect. In the fifth aspect, the refrigeration cycle apparatus further includes a soundproof box (60) configured to cover the compressor (30), and the soundproof box (60) is supported by the support member (50).

In the fifth aspect, the compressor (30) is covered with the soundproof box (60), keeping radiated sound and vibration sound caused by the compressor (30) from leaking outside.

A sixth aspect of the present disclosure is an embodiment of the refrigeration cycle apparatus of the fifth aspect. In the sixth aspect, the refrigeration cycle apparatus further includes a second elastic member (65) configured to support the soundproof box (60), and the second elastic member (65) is supported by the support member (50).

In the sixth aspect, the second elastic member (65) reduces the vibration transmitted from the compressor (30) to the support member (50), reducing the vibration of the soundproof box (60).

A seventh aspect of the present disclosure is an embodiment of the refrigeration cycle apparatus of the third aspect. In the seventh aspect, the refrigeration cycle apparatus further includes a soundproof box (60) configured to cover the compressor (30), and the soundproof box (60) is supported by the first support member (51) or the second support member (52).

In the seventh aspect, the compressor (30) is supported by a two-layer antivibration structure made by stacking the first vibration isolating member (41) and the second vibration isolating member (42), reducing the vibration transmitted from the compressor (30) to the first support member (51) or the second support member (52). This can reduce the vibration transmitted to the soundproof box (60).

An eighth aspect of the present disclosure is an embodiment of the refrigeration cycle apparatus of the seventh aspect. In the eighth aspect, the refrigeration cycle apparatus further includes a second elastic member (65) configured to support the soundproof box (60), and the second elastic member (65) is supported by the first support member (51) or the second support member (52).

In the eighth aspect, the second elastic member (65) reduces the vibration transmitted from the compressor (30) to the first support member (51) or the second support member (52), reducing the transmission of the vibration to the soundproof box (60).

A ninth aspect of the present disclosure is an embodiment of the refrigeration cycle apparatus of any one of the fifth to eighth aspects. In the ninth aspect, the soundproof box (60) is provided with a pipe hole (63) through which the pipe (26) of the compressor (30) passes, and the refrigeration cycle apparatus further includes a first lid member (61) configured to be movable along a surface of the soundproof box (60) to close a gap between the pipe (26) and the pipe hole (63).

In the ninth aspect, the first lid member (61) can keep the radiated sound and the vibration sound caused by the compressor (30) from leaking from the pipe hole (63) of the soundproof box (60). Even when the pipe (26) vibrates in the pipe hole (63), the first lid member (61) moves along the surface of the soundproof box (60), keeping the gap closed.

A tenth aspect of the present disclosure is an embodiment of the refrigeration cycle apparatus of any one of the fifth to eighth aspects. In the tenth aspect, the soundproof box (60) is provided with a pipe hole (63) through which the pipe (26) of the compressor (30) passes, and the refrigeration cycle apparatus further includes a second lid member (62) configured to be fitted into the pipe hole (63) to close a gap between the pipe (26) and the pipe hole (63).

In the tenth aspect, the second lid member (62) can keep the pipe (26) and the soundproof box (60) from making contact with each other, and can also keep the radiated sound and the vibration sound caused by the compressor (30) from leaking out of the pipe hole (63) of the soundproof box (60).

An eleventh aspect of the present disclosure is an embodiment of the refrigeration cycle apparatus of any one of the fifth to tenth aspects. In the eleventh aspect, a component (5) of the refrigerant circuit (2) is disposed inside the soundproof box (60), and the component (5) includes an accumulator (25).

In the eleventh aspect, the component (5) of the refrigerant circuit (2) is disposed inside the soundproof box (60), keeping the sound of the refrigerant flowing through the refrigerant circuit (2) from leaking outside. Further, the overall weight of the structure supported by the vibration isolating member (40) is increased, improving the effect of damping the vibration.

A twelfth aspect of the present disclosure is an embodiment of the refrigeration cycle apparatus of any one of the fifth to eleventh aspects. In the twelfth aspect, a component (5) of the refrigerant circuit (2) is connected to the pipe (26) of the compressor (30), and the pipe (26) is disposed inside the soundproof box (60).

In the twelfth aspect, the pipe (26) of the compressor (30) is disposed inside the soundproof box (60). Thus, even when the vibration sound is generated by the vibration transmitted from the compressor (30) to the pipe (26), the vibration sound can be kept from leaking outside.

A thirteenth aspect of the present disclosure is an embodiment of the refrigeration cycle apparatus of any one of the fifth to twelfth aspects. In the thirteenth aspect, the soundproof box (60) is provided with a sound absorber (66).

In the thirteenth aspect, the sound absorber (66) provided for the soundproof box (60) can absorb the radiated sound and the vibration sound caused by the compressor (30), keeping the sounds from leaking outside.

A fourteenth aspect of the present disclosure is an embodiment of the refrigeration cycle apparatus of any one of the first to thirteenth aspects. In the fourteenth aspect, the rigid member (35) includes a block pipe (70). The block pipe (70) includes a plurality of first bushes (81) and a plurality of second bushes (82) to which the pipe (26) is connected, and a plurality of refrigerant flow paths (83) with which the plurality of first bushes (81) and the plurality of second bushes (82) communicate.

In the fourteenth aspect, the pipe (26) for the various components disposed in the machine chamber (S1) can be integrated by connecting the pipe (26) to the single block pipe (70).

### BRIEF DESCRIPTION OF THE DRAWINGS

FIG. 1 is a refrigerant circuit diagram of a refrigeration cycle apparatus of a first embodiment.
FIG. 2 is a front view illustrating a configuration of an outdoor unit.
FIG. 3 is a front view illustrating a support structure of a compressor.
FIG. 4 is a front view illustrating a first variation of the first embodiment.
FIG. 5 is a front view illustrating a second variation of the first embodiment.
FIG. 6 is a front view illustrating a third variation of the first embodiment.
FIG. 7 is a front view illustrating a fourth variation of the first embodiment.
FIG. 8 is a front view illustrating a fifth variation of the first embodiment.
FIG. 9 is a front view illustrating a sixth variation of the first embodiment.
FIG. 10 is a front view illustrating a seventh variation of the first embodiment.
FIG. 11 is a front view illustrating an eighth variation of the first embodiment.
FIG. 12 is a front view illustrating a configuration of a refrigeration cycle apparatus of a second embodiment.
FIG. 13 is a front view illustrating a first variation of the second embodiment.
FIG. 14 is a front view illustrating a second variation of the second embodiment.
FIG. 15 is a front view illustrating a third variation of the second embodiment.
FIG. 16 is a front view illustrating a fourth variation of the second embodiment.
FIG. 17 is a front view illustrating a fifth variation of the second embodiment.
FIG. 18 is a front view illustrating a configuration of a refrigeration cycle apparatus of a third embodiment.
FIG. 19 is a front view illustrating a first variation of the third embodiment.
FIG. 20 is a front view illustrating a second variation of the third embodiment.
FIG. 21 is a front view illustrating a third variation of the third embodiment.
FIG. 22 is a front view illustrating a configuration of a refrigeration cycle apparatus of a fourth embodiment.
FIG. 23 is a front view illustrating a first variation of the fourth embodiment.
FIG. 24 is a front view illustrating a second variation of the fourth embodiment.
FIG. 25 is a front view illustrating a third variation of the fourth embodiment.
FIG. 26 is a front view illustrating a fourth variation of the fourth embodiment.
FIG. 27 is a front view illustrating a configuration of a refrigeration cycle apparatus of a fifth embodiment.
FIG. 28 is an exploded perspective view illustrating a configuration of a block pipe.
FIG. 29 is a cross-sectional view in the direction of arrows on line X1-X1 in FIG. 28.
FIG. 30 is a cross-sectional view in the direction of arrows on line X2-X2 in FIG. 28.
FIG. 31 is a cross-sectional view in the direction of arrows on line X3-X3 in FIG. 28.
FIG. 32 is a front view illustrating a pipe of a compressor with a load weight attached.
FIG. 33 is a graph showing the relationship between the weight of the load weight and the average acceleration amplitude at position A.

### DESCRIPTION OF EMBODIMENTS

### <<First Embodiment>>

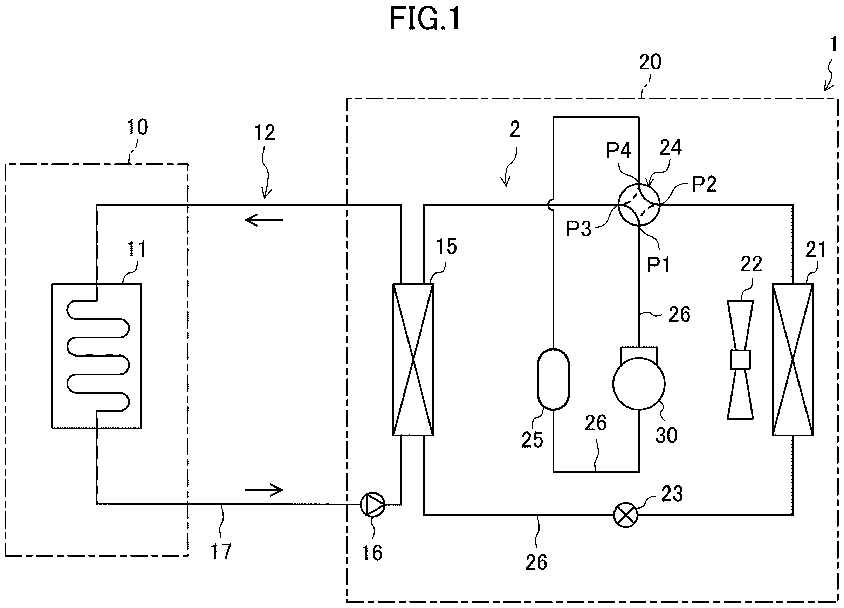

As illustrated in FIG. 1, a refrigeration cycle apparatus (1) includes an air conditioner unit (10) and an outdoor unit (20). The outdoor unit (20) includes a refrigerant circuit (2). The refrigerant circuit (2) is filled with, for example, a flammable natural refrigerant. The refrigerant circuit (2) circulates the refrigerant to perform a refrigeration cycle.

### <Air Conditioner Unit>

The air conditioner unit (10) includes an air conditioner (11). The air conditioner (11) is connected to a fluid circuit (12). A temperature adjustment fluid flows through the fluid circuit (12). The temperature adjustment fluid is, for example, water. The air conditioner (11) is installed in an indoor space to be air-conditioned.

The fluid circuit (12) includes the air conditioner (11), a fluid pump (16), and a water heat exchanger (15) connected by a fluid pipe (17). The fluid pump (16) circulates water in the fluid circuit (12).

### <Outdoor Unit>

The outdoor unit (20) includes the water heat exchanger (15), an outdoor heat exchanger (21), an outdoor fan (22), an outdoor expansion valve (23), a four-way switching valve (24), an accumulator (25), and a compressor (30). The outdoor heat exchanger (21), the outdoor expansion valve (23), the four-way switching valve (24), and the compressor (30) are connected by a pipe (26). The refrigerant flows through the pipe (26).

The outdoor heat exchanger (21) is, for example, a cross-fin type fin-and-tube heat exchanger. In the outdoor heat exchanger (21), heat exchange occurs between the refrigerant flowing through the outdoor heat exchanger (21) and air blown by the outdoor fan (22). The outdoor expansion valve (23) is, for example, an electronic expansion valve.

The compressor (30) is, for example, a rotary compressor such as a scroll compressor. The four-way switching valve (24) is connected to the pipe (26) on the discharge side of the compressor (30). The accumulator (25) is connected to the pipe (26) on the suction side of the compressor (30).

The pipe (26) of the refrigerant circuit (2) is connected to the water heat exchanger (15). The water heat exchanger (15) causes heat exchange between the refrigerant flowing through the pipe (26) and water flowing through the fluid pipe (17).

The four-way switching valve (24) has a first port (P1), a second port (P2), a third port (P3), and a fourth port (P4). The four-way switching valve (24) is in a state (indicated by the solid line in FIG. 1) where the first port (P1) and the third port (P3) are in communication with each other, and the second port (P2) and the fourth port (P4) are in communication with each other.

The air conditioner (11) is a heat exchanger that functions as a radiator of the temperature adjustment fluid circulating in the fluid circuit (12). The air conditioner (11) is an example of a target for temperature adjustment. The air conditioner (11) is specifically a device such as a radiator or a floor cooling/heating panel. For example, when the air conditioner (11) is a radiator, the air conditioner (11) is provided near a wall or the like in the room. For example, when the air conditioner (11) is a floor cooling/heating panel, the air conditioner (11) is provided under the floor or the like of the room.

In this embodiment, the refrigeration cycle apparatus (1) is described as a device including the refrigerant circuit (2) and the fluid circuit (12), but the refrigeration cycle apparatus (1) is not limited to this configuration. For example, the refrigeration cycle apparatus (1) may be an air conditioner including a single refrigerant circuit (2).

### <Internal Configuration of Outdoor Unit>

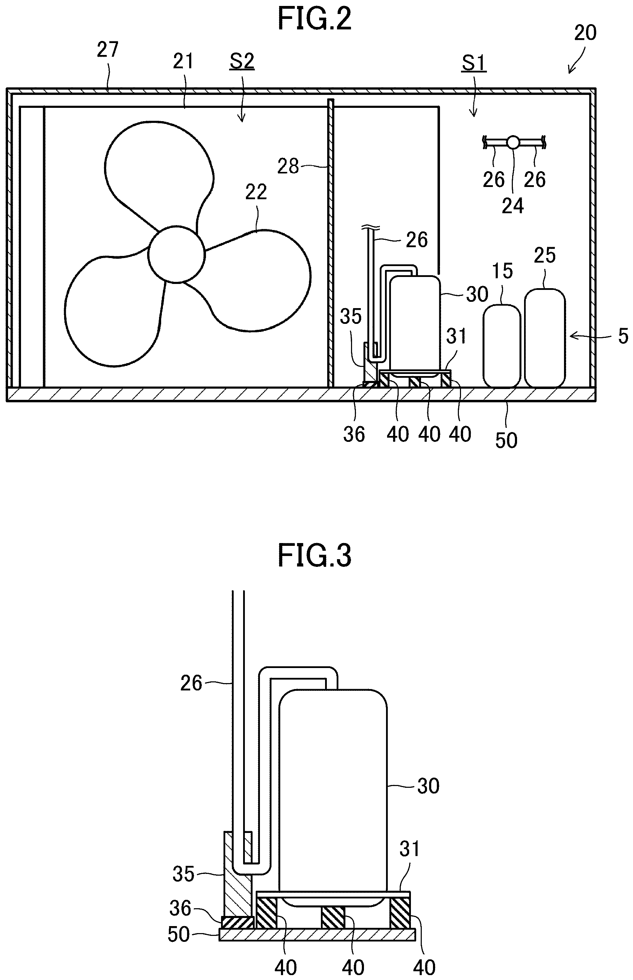

As illustrated in FIG. 2, the outdoor unit (20) includes a body casing (27). The body casing (27) is formed in a box shape. A partitioning member (28) is disposed upright in the body casing (27). The partitioning member (28) partitions the body casing (27) into a machine chamber (S1) and a fan chamber (S2).

The machine chamber (S1) is a space in the body casing (27) on the right side of the partitioning member (28) in FIG. 2. The compressor (30), the water heat exchanger (15), the four-way switching valve (24), the accumulator (25), and the pipe (26) are placed in the machine chamber (S1).

The fan chamber (S2) is a space in the body casing (27) on the left side of the partitioning member (28) in FIG. 2. The outdoor fan (22) and the outdoor heat exchanger (21) are placed in the fan chamber (S2).

### <Arrangement of Compressor>

As illustrated in FIG. 3, the compressor (30) includes a support leg (31). The support leg (31) is supported by a plurality of vibration isolating members (40). The vibration isolating members (40) are made of, for example, rubber or urethane. The vibration isolating members (40) are supported by a support member (50). In the example shown in FIG. 3, the support member (50) is a bottom plate of the body casing (27). Thus, even when the compressor (30) vibrates while the refrigeration cycle apparatus (1) is in operation, the vibration is damped by the vibration isolating members (40) before being transmitted to the support member (50).

The pipe (26) is connected to the compressor (30). The pipe (26) is formed of, for example, a copper pipe. The pipe (26) is provided with a rigid member (35). The rigid member (35) is made of a material that is more rigid than the pipe (26). The rigid member (35) is made of, for example, a metal material having a specific gravity of 2.5 or more.

The rigid member (35) is supported by a first elastic member (36). The first elastic member (36) is made of, for example, rubber or urethane. The first elastic member (36) is supported by the support member (50).

According to the features of the first embodiment, the rigid member (35) reduces the vibration transmitted from the compressor (30) to the pipe (26), reducing vibration sound caused by the vibration of the pipe (26).

According to the features of the first embodiment, the first elastic member (36) reduces, via the rigid member (35), the vibration transmitted from the compressor (30) to the pipe (26), reducing the transmission of the vibration to the support member (50).

### -First Variation of First Embodiment-

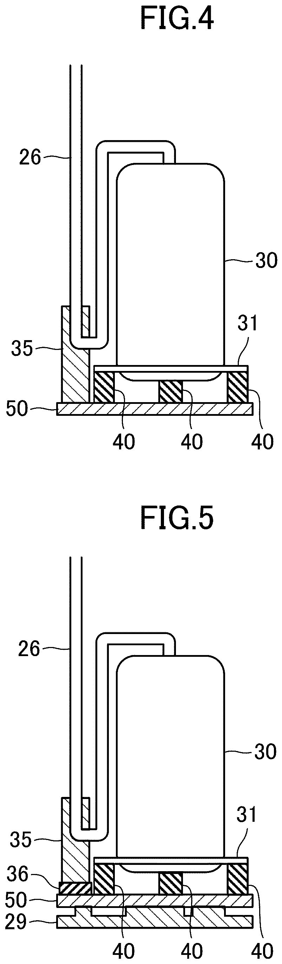

As illustrated in FIG. 4, the rigid member (35) may be directly supported by the support member (50).

The support leg (31) of the compressor (30) is supported by the plurality of vibration isolating members (40). The vibration isolating members (40) are supported by the support member (50). The rigid member (35) is provided on the pipe (26) of the compressor (30). The rigid member (35) is supported by the support member (50).

According to the features of the first variation of the first embodiment, the rigid member (35) reduces the vibration transmitted from the compressor (30) to the pipe (26), reducing the vibration sound caused by the vibration of the pipe (26).

### -Second Variation of First Embodiment-

When the bottom plate (29) of the body casing (27) of the outdoor unit (20) has an uneven top surface as illustrated in FIG. 5, a support member (50) different from the bottom plate (29) may be placed on the bottom plate (29).

The support leg (31) of the compressor (30) is supported by the plurality of vibration isolating members (40). The vibration isolating members (40) are supported by the support member (50). The support member (50) is supported by the bottom plate (29). The rigid member (35) is provided on the pipe (26) of the compressor (30). The rigid member (35) is supported by the first elastic member (36). The first elastic member (36) is supported by the support member (50).

According to the features of the second variation of the first embodiment, the compressor (30) can be supported by the flat surface of a first support member (51) even when the bottom plate (29) has an uneven top surface.

### -Third Variation of First Embodiment-

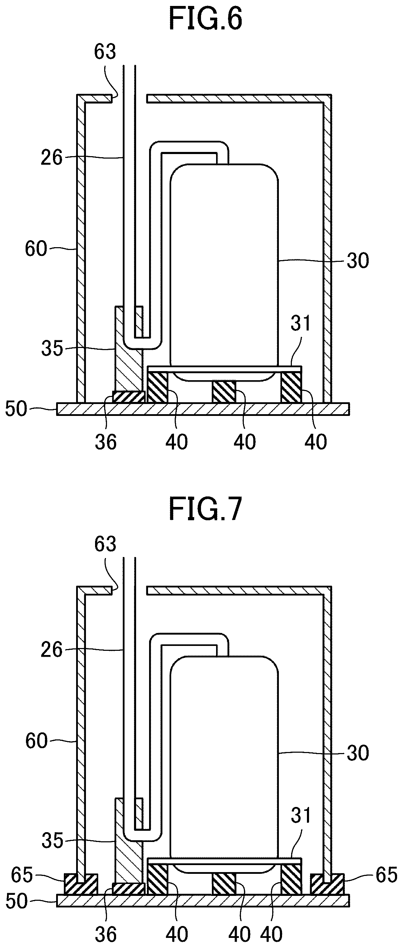

As illustrated in FIG. 6, a soundproof box (60) may be provided to cover the compressor (30).

The support leg (31) of the compressor (30) is supported by the plurality of vibration isolating members (40). The vibration isolating members (40) are supported by the support member (50). The rigid member (35) is provided on the pipe (26) of the compressor (30). The rigid member (35) is supported by the first elastic member (36). The first elastic member (36) is supported by the support member (50).

The soundproof box (60) is formed in the shape of a box that opens downward. A pipe hole (63) is formed in an upper surface of the soundproof box (60). The pipe (26) of the compressor (30) is drawn out of the soundproof box (60) through the pipe hole (63). The soundproof box (60) is supported by the support member (50).

According to the features of the third variation of the first embodiment, the compressor (30) is covered with the soundproof box (60), keeping radiated sound and vibration sound caused by the compressor (30) from leaking outside.

### -Fourth Variation of First Embodiment-

As illustrated in FIG. 7, the soundproof box (60) may be supported by a second elastic member (65).

The support leg (31) of the compressor (30) is supported by the plurality of vibration isolating members (40). The vibration isolating members (40) are supported by the support member (50). The rigid member (35) is provided on the pipe (26) of the compressor (30). The rigid member (35) is supported by the first elastic member (36). The first elastic member (36) is supported by the support member (50).

The soundproof box (60) is supported by the second elastic member (65). The second elastic member (65) is made of, for example, rubber or urethane. The second elastic member (65) is supported by the support member (50). The pipe (26) of the compressor (30) is drawn out of the soundproof box (60) through the pipe hole (63).

According to the features of the fourth variation of the first embodiment, the second elastic member (65) reduces the vibration transmitted from the compressor (30) to the support member (50), keeping the vibration from being transmitted to the soundproof box (60).

When the vibration of the soundproof box (60) is reduced, the pipe (26) passing through the pipe hole (63) is less likely to make contact with the soundproof box (60). Thus, the diameter of the pipe hole (63) can be reduced. This can reduce sound leakage from the pipe hole (63) of the soundproof box (60).

### -Fifth Variation of First Embodiment-

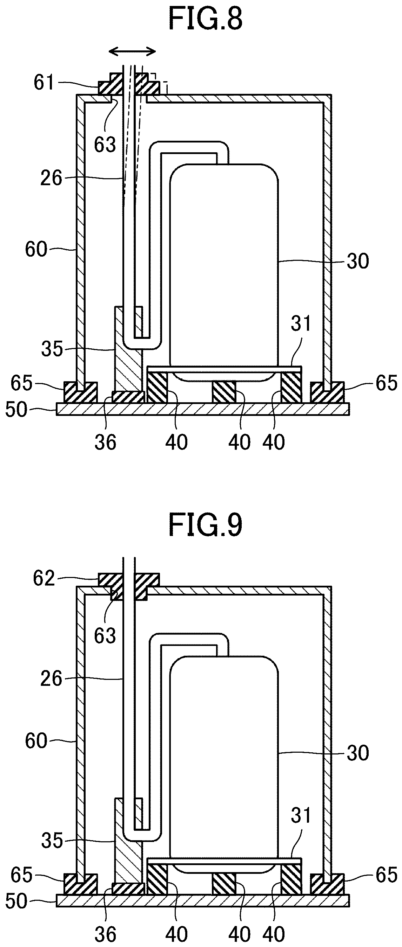

As illustrated in FIG. 8, a gap between the pipe (26) of the compressor (30) and the pipe hole (63) of the soundproof box (60) may be closed by a first lid member (61).

The support leg (31) of the compressor (30) is supported by the plurality of vibration isolating members (40). The vibration isolating members (40) are supported by the support member (50). The rigid member (35) is provided on the pipe (26) of the compressor (30). The rigid member (35) is supported by the first elastic member (36). The first elastic member (36) is supported by the support member (50).

The soundproof box (60) is supported by the second elastic member (65). The second elastic member (65) is supported by the support member (50). The pipe (26) of the compressor (30) is drawn out of the soundproof box (60) through the pipe hole (63).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the fifth variation of the first embodiment, the first lid member (61) can keep the radiated sound and the vibration sound caused by the compressor (30) from leaking from the pipe hole (63) of the soundproof box (60). Even when the pipe (26) vibrates in the pipe hole (63), the first lid member (61) moves along the surface of the soundproof box (60), keeping the gap closed.

### -Sixth Variation of First Embodiment-

As illustrated in FIG. 9, a gap between the pipe (26) of the compressor (30) and the pipe hole (63) of the soundproof box (60) may be closed by a second lid member (62).

The support leg (31) of the compressor (30) is supported by the plurality of vibration isolating members (40). The vibration isolating members (40) are supported by the support member (50). The rigid member (35) is provided on the pipe (26) of the compressor (30). The rigid member (35) is supported by the first elastic member (36). The first elastic member (36) is supported by the support member (50).

The soundproof box (60) is supported by the second elastic member (65). The second elastic member (65) is supported by the support member (50). The pipe (26) of the compressor (30) is drawn out of the soundproof box (60) through the pipe hole (63).

The second lid member (62) is attached to the pipe (26). The second lid member (62) is fitted into the pipe hole (63). The second lid member (62) closes the gap between the pipe (26) and the pipe hole (63). The second lid member (62) is formed of an elastically deformable member. The second lid member (62) is made of, for example, rubber or urethane. The second lid member (62) elastically deforms as the pipe (26) vibrates.

According to the features of the sixth variation of the first embodiment, the second lid member (62) can keep the pipe (26) and the soundproof box (60) from making contact with each other, and can also keep the radiated sound and the vibration sound caused by the compressor (30) from leaking out of the pipe hole (63) of the soundproof box (60).

### -Seventh Variation of First Embodiment-

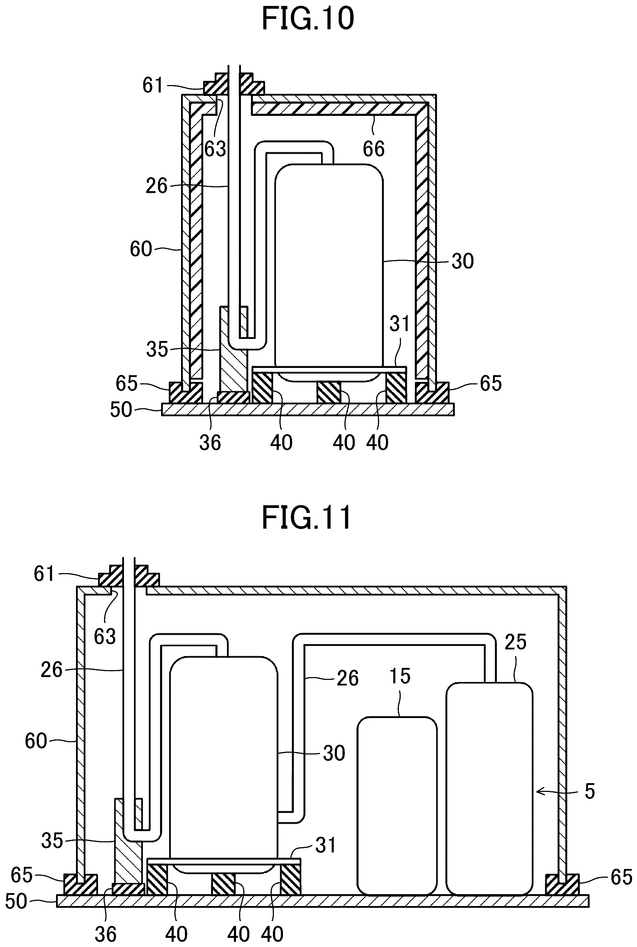

As illustrated in FIG. 10, the soundproof box (60) may be provided with a sound absorber (66).

The support leg (31) of the compressor (30) is supported by the plurality of vibration isolating members (40). The vibration isolating members (40) are supported by the support member (50). The rigid member (35) is provided on the pipe (26) of the compressor (30). The rigid member (35) is supported by the first elastic member (36). The first elastic member (36) is supported by the support member (50).

The soundproof box (60) is supported by the second elastic member (65). The second elastic member (65) is supported by the support member (50). The pipe (26) of the compressor (30) is drawn out of the soundproof box (60) through the pipe hole (63).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

The sound absorber (66) is provided on an inner surface of the soundproof box (60). The sound absorber (66) may be provided on an outer surface of the soundproof box (60).

According to the features of the seventh variation of the first embodiment, the sound absorber (66) provided for the soundproof box (60) can absorb the radiated sound and the vibration sound caused by the compressor (30), keeping the sounds from leaking outside.

The soundproof box (60) provided with the sound absorber (66) is applicable to the other embodiments and variations in the same manner.

### -Eighth Variation of First Embodiment-

As illustrated in FIG. 11, components (5) of the refrigerant circuit (2) may be disposed in the soundproof box (60).

The support leg (31) of the compressor (30) is supported by the plurality of vibration isolating members (40). The vibration isolating members (40) are supported by the support member (50). The rigid member (35) is provided on the pipe (26) of the compressor (30). The rigid member (35) is supported by the first elastic member (36). The first elastic member (36) is supported by the support member (50).

The components (5) of the refrigerant circuit (2) include the water heat exchanger (15) and the accumulator (25). The water heat exchanger (15) and the accumulator (25) are supported by the support member (50). The accumulator (25) is connected to the compressor (30) by the pipe (26).

The components (5) of the refrigerant circuit (2) disposed in the soundproof box (60) may further include, for example, other components such as the four-way switching valve (24), and an electromagnetic valve, an electric valve, an economizer, and a muffler which are not shown, in addition to the water heat exchanger (15) and the accumulator (25).

The pipe (26) connecting the compressor (30) and the accumulator (25) is covered with the soundproof box (60). The soundproof box (60) is supported by the second elastic member (65). The second elastic member (65) is supported by the support member (50). The pipe (26) of the compressor (30) is drawn out of the soundproof box (60) through the pipe hole (63).

The whole part of the pipe (26) connecting the compressor (30) and the accumulator (25) does not need to be disposed inside the soundproof box (60), and part of the pipe (26) may be drawn out of the soundproof box (60).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the eighth variation of the first embodiment, the components (5) of the refrigerant circuit (2) are disposed inside the soundproof box (60), keeping the sound of the refrigerant flowing through the refrigerant circuit (2) from leaking outside.

According to the features of the eighth variation of the first embodiment, the pipe (26) of the compressor (30) is disposed inside the soundproof box (60). Thus, even when the vibration sound is generated by the vibration transmitted from the compressor (30) to the pipe (26), the vibration sound can be kept from leaking outside.

### <<Second Embodiment>>

In the following description, the same reference characters designate the same components as those of the first embodiment, and the description is focused only on the difference.

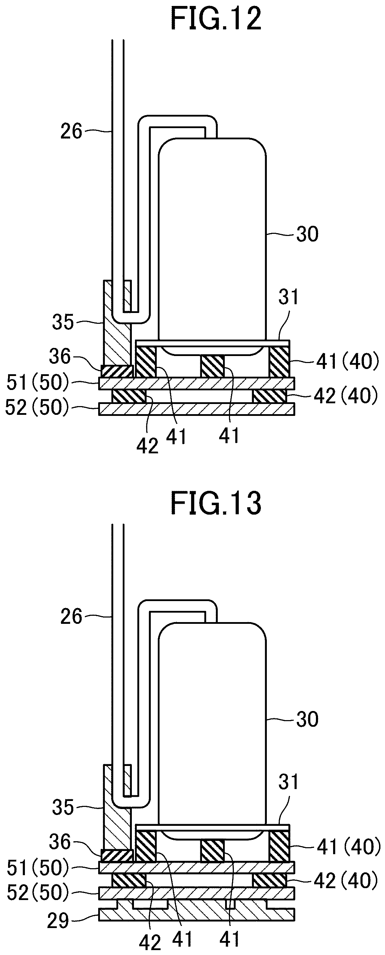

As illustrated in FIG. 12, the vibration isolating members (40) include first vibration isolating members (41) and second vibration isolating members (42). The first vibration isolating members (41) and the second vibration isolating members (42) are made of, for example, rubber or urethane. The first vibration isolating members (41) and the second vibration isolating members (42) may be made of the same material or different materials, and may have the same spring constant or different spring constants. The support member (50) includes a first support member (51) and a second support member (52). In the example shown in FIG. 12, the second support member (52) is a bottom plate of the body casing (27).

The compressor (30) includes the support leg (31). The support leg (31) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The compressor (30) is placed on a double antivibration structure comprised of the first vibration isolating members (41), the first support member (51), and the second vibration isolating members (42). Thus, even when the compressor (30) vibrates while the refrigeration cycle apparatus (1) is in operation, the transmission of the vibration and noise generation are reduced.

The rigid member (35) is supported by the first elastic member (36). The first elastic member (36) is supported by the first support member (51). The vibration of the rigid member (35) is damped by the first elastic member (36).

According to the features of the second embodiment, the compressor (30) is supported by a two-layer antivibration structure made by stacking the first vibration isolating members (41) and the second vibration isolating members (42), reducing the vibration transmitted from the compressor (30) to the support member (50) and the vibration transmitted from the compressor (30) to the pipe (26). This can reduce the vibration sound generated by the vibration of the support member (50) and the pipe (26).

According to the features of the second embodiment, the first elastic member (36) reduces, via the rigid member (35), the vibration transmitted from the compressor (30) to the pipe (26), reducing the transmission of the vibration to the first support member (51).

### -First Variation of Second Embodiment-

When the bottom plate (29) of the body casing (27) of the outdoor unit (20) has an uneven top surface as illustrated in FIG. 13, a second support member (52) different from the bottom plate (29) may be placed on the bottom plate (29).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52). The second support member (52) is supported by the bottom plate (29). The rigid member (35) is provided on the pipe (26) of the compressor (30). The rigid member (35) is supported by the first elastic member (36). The first elastic member (36) is supported by the first support member (51).

According to the features of the first variation of the second embodiment, the compressor (30) can be supported by the flat surface of the second support member (52) even when the bottom plate (29) has an uneven top surface.

### -Second Variation of Second Embodiment-

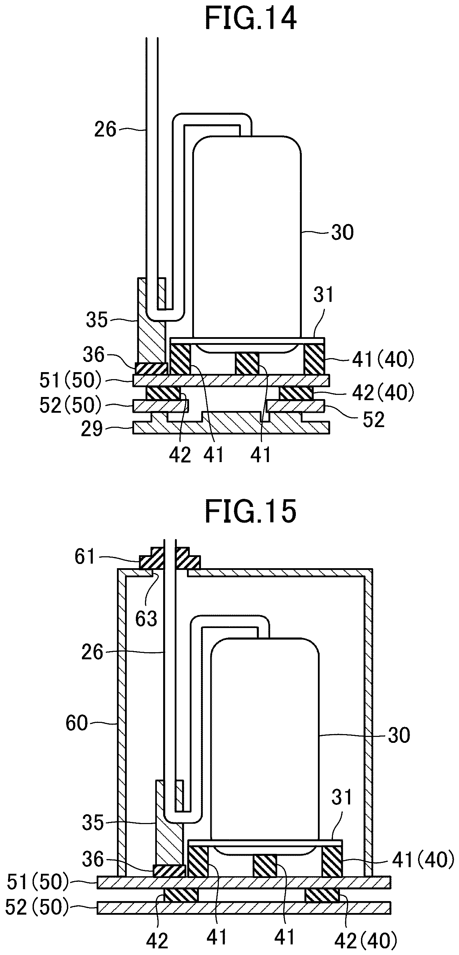

When the bottom plate (29) of the body casing (27) of the outdoor unit (20) has an uneven top surface as illustrated in FIG. 14, a second support member (52) different from the bottom plate (29) may be placed on the bottom plate (29). In this case, the second support member (52) may be divided into some parts in accordance with the arrangement of the second vibration isolating members (42).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating member (42) on the left in FIG. 14 is supported by the left second support member (52). The second vibration isolating member (42) on the right in FIG. 14 is supported by the right second support member (52). The left and right second support members (52) are supported by the bottom plate (29).

The rigid member (35) is provided on the pipe (26) of the compressor (30). The rigid member (35) is supported by the first elastic member (36). The first elastic member (36) is supported by the first support member (51).

According to the features of the second variation of the second embodiment, the compressor (30) can be supported by the flat surfaces of the second support members (52) each having an area required to support the second vibration isolating member (42), even when the bottom plate (29) has an uneven top surface. This can reduce the overall weight of the device.

### -Third Variation of Second Embodiment-

As illustrated in FIG. 15, a soundproof box (60) may be provided to cover the compressor (30).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the first support member (51).

The soundproof box (60) is formed in the shape of a box that opens downward. A pipe hole (63) is formed in an upper surface of the soundproof box (60). The pipe (26) of the compressor (30) is drawn out of the soundproof box (60) through the pipe hole (63). The soundproof box (60) is supported by the first support member (51).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the third variation of the second embodiment, the compressor (30) is covered with the soundproof box (60), keeping the radiated sound and the vibration sound caused by the compressor (30) from leaking outside.

### -Fourth Variation of Second Embodiment-

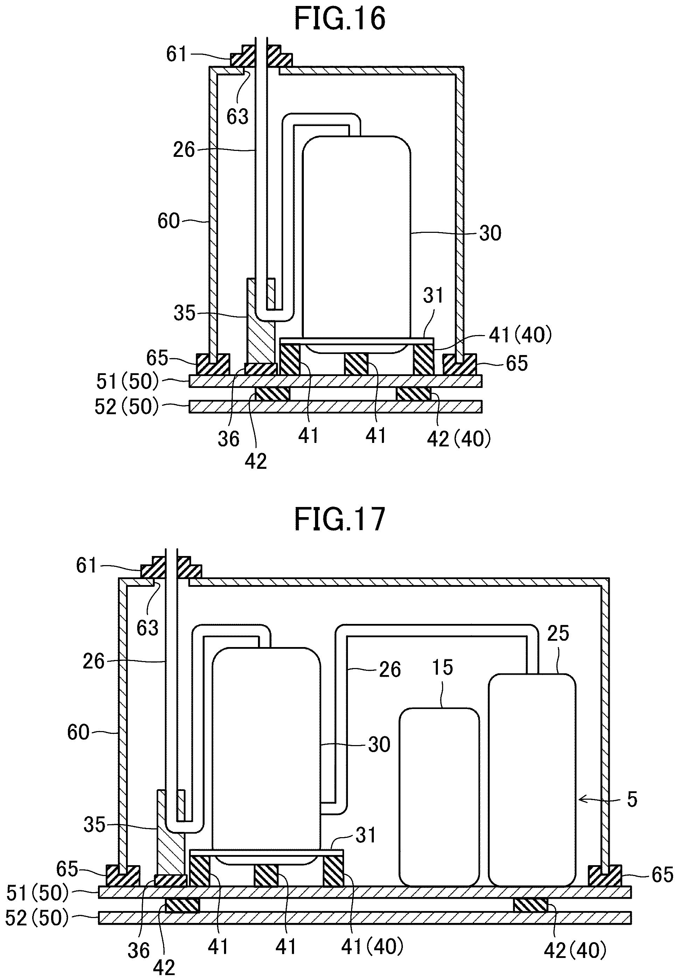

As illustrated in FIG. 16, the soundproof box (60) may be supported by a second elastic member (65).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the first support member (51).

The soundproof box (60) is supported by the second elastic member (65). The second elastic member (65) is made of, for example, rubber or urethane. The second elastic member (65) is supported by the first support member (51). The pipe (26) of the compressor (30) is drawn out of the soundproof box (60) through the pipe hole (63).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the fourth variation of the second embodiment, the second elastic member (65) reduces the vibration transmitted from the compressor (30) to the first support member (51), keeping the vibration from being transmitted to the soundproof box (60).

When the vibration of the soundproof box (60) is reduced, the pipe (26) passing through the pipe hole (63) is less likely to make contact with the soundproof box (60). Thus, the diameter of the pipe hole (63) can be reduced. This can reduce sound leakage from the pipe hole (63) of the soundproof box (60).

### -Fifth Variation of Second Embodiment-

As illustrated in FIG. 17, components (5) of the refrigerant circuit (2) may be disposed in the soundproof box (60).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the first support member (51).

The components (5) of the refrigerant circuit (2) include the water heat exchanger (15) and the accumulator (25). The water heat exchanger (15) and the accumulator (25) are supported by the first support member (51). The accumulator (25) is connected to the compressor (30) by the pipe (26).

The pipe (26) connecting the compressor (30) and the accumulator (25) is covered with the soundproof box (60). The soundproof box (60) is supported by the second elastic member (65). The second elastic member (65) is supported by the first support member (51). The pipe (26) of the compressor (30) is drawn out of the soundproof box (60) through the pipe hole (63).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the fifth variation of the second embodiment, the components (5) of the refrigerant circuit (2) are disposed inside the soundproof box (60), keeping the sound of the refrigerant flowing through the refrigerant circuit (2) from leaking outside. Further, the overall weight of the structure supported by the vibration isolating member (40) is increased, improving the effect of damping the vibration.

According to the features of the fifth variation of the second embodiment, the pipe (26) of the compressor (30) is disposed inside the soundproof box (60). Thus, even when the vibration sound is generated by the vibration transmitted from the compressor (30) to the pipe (26), the vibration sound can be kept from leaking outside.

### <<Third Embodiment>>

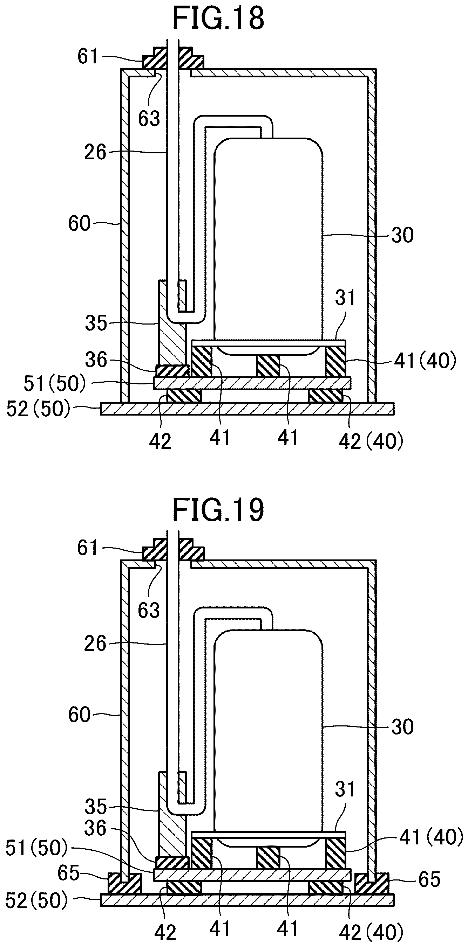

As illustrated in FIG. 18, the soundproof box (60) may be supported by a second support member (52).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the first support member (51).

The soundproof box (60) is formed in the shape of a box that opens downward. A pipe hole (63) is formed in an upper surface of the soundproof box (60). The pipe (26) of the compressor (30) is drawn out of the soundproof box (60) through the pipe hole (63). The soundproof box (60) is supported by the second support member (52).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the third embodiment, the compressor (30) is supported by a two-layer antivibration structure made by stacking the first vibration isolating members (41) and the second vibration isolating members (42), reducing the vibration transmitted from the compressor (30) to the first support member (51) or the second support member (52). This can reduce the vibration transmitted to the soundproof box (60).

### -First Variation of Third Embodiment-

As illustrated in FIG. 19, the soundproof box (60) may be supported by a second elastic member (65).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the first support member (51).

The soundproof box (60) is supported by the second elastic member (65). The second elastic member (65) is made of rubber or urethan. The second elastic member (65) is supported by the second support member (52). The pipe (26) of the compressor (30) is drawn out of the soundproof box (60) through the pipe hole (63).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the first variation of the third embodiment, the second elastic member (65) reduces the vibration transmitted from the compressor (30) to the second support member (52), keeping the vibration from being transmitted to the soundproof box (60).

When the vibration of the soundproof box (60) is reduced, the pipe (26) passing through the pipe hole (63) is less likely to make contact with the soundproof box (60). Thus, the diameter of the pipe hole (63) can be reduced. This can reduce sound leakage from the pipe hole (63) of the soundproof box (60).

### -Second Variation of Third Embodiment-

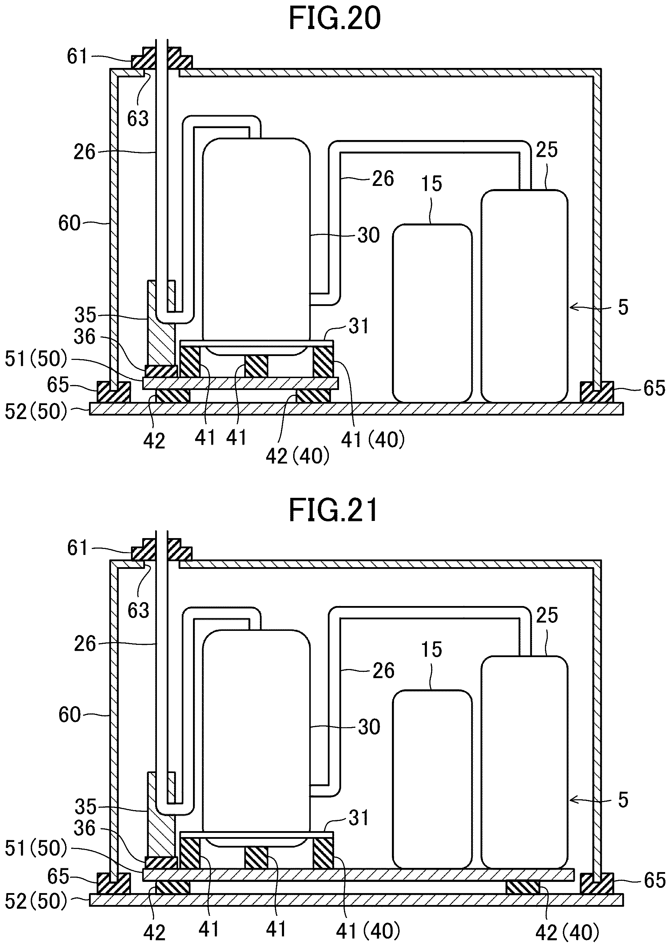

As illustrated in FIG. 20, components (5) of the refrigerant circuit (2) may be disposed in the soundproof box (60).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the first support member (51).

The components (5) of the refrigerant circuit (2) include the water heat exchanger (15) and the accumulator (25). The water heat exchanger (15) and the accumulator (25) are supported by the second support member (52). The accumulator (25) is connected to the compressor (30) by the pipe (26).

The pipe (26) connecting the compressor (30) and the accumulator (25) is covered with the soundproof box (60). The soundproof box (60) is supported by the second elastic member (65). The second elastic member (65) is supported by the second support member (52). The pipe (26) of the compressor (30) is drawn out of the soundproof box (60) through the pipe hole (63).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the second variation of the third embodiment, the components (5) of the refrigerant circuit (2) are disposed inside the soundproof box (60), keeping the sound of the refrigerant flowing through the refrigerant circuit (2) from leaking outside.

According to the features of the second variation of the third embodiment, the pipe (26) of the compressor (30) is disposed inside the soundproof box (60). Thus, even when the vibration sound is generated by the vibration transmitted from the compressor (30) to the pipe (26), the vibration sound can be kept from leaking outside.

### -Third Variation of Third Embodiment-

As illustrated in FIG. 21, the components (5) of the refrigerant circuit (2) may be supported by the first support member (51).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the first support member (51).

The components (5) of the refrigerant circuit (2) include the water heat exchanger (15) and the accumulator (25). The water heat exchanger (15) and the accumulator (25) are supported by the first support member (51). The accumulator (25) is connected to the compressor (30) by the pipe (26).

The pipe (26) connecting the compressor (30) and the accumulator (25) is covered with the soundproof box (60). The soundproof box (60) is supported by the second elastic member (65). The second elastic member (65) is supported by the second support member (52). The pipe (26) of the compressor (30) is drawn out of the soundproof box (60) through the pipe hole (63).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the third variation of the third embodiment, the components (5) of the refrigerant circuit (2) are disposed inside the soundproof box (60), keeping the sound of the refrigerant flowing through the refrigerant circuit (2) from leaking outside. Further, the overall weight of the structure supported by the vibration isolating member (40) is increased, improving the effect of damping the vibration.

According to the features of the third variation of the third embodiment, the pipe (26) of the compressor (30) is disposed inside the soundproof box (60). Thus, even when the vibration sound is generated by the vibration transmitted from the compressor (30) to the pipe (26), the vibration sound can be kept from leaking outside.

### <<Fourth Embodiment>>

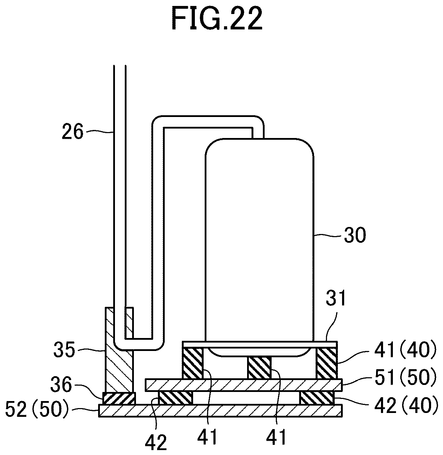

As illustrated in FIG. 22, the rigid member (35) may be supported by the second support member (52).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the second support member (52).

According to the features of the fourth embodiment, the compressor (30) is supported by a two-layer antivibration structure made by stacking the first vibration isolating members (41) and the second vibration isolating members (42), reducing the vibration transmitted from the compressor (30) to the support member (50) and the vibration transmitted from the compressor (30) to the pipe (26). This can reduce the vibration sound generated by the vibration of the support member (50) and the pipe (26).

According to the features of the fourth embodiment, the first elastic member (36) reduces, via the rigid member (35), the vibration transmitted from the compressor (30) to the pipe (26), reducing the transmission of the vibration to the second support member (52).

### -First Variation of Fourth Embodiment-

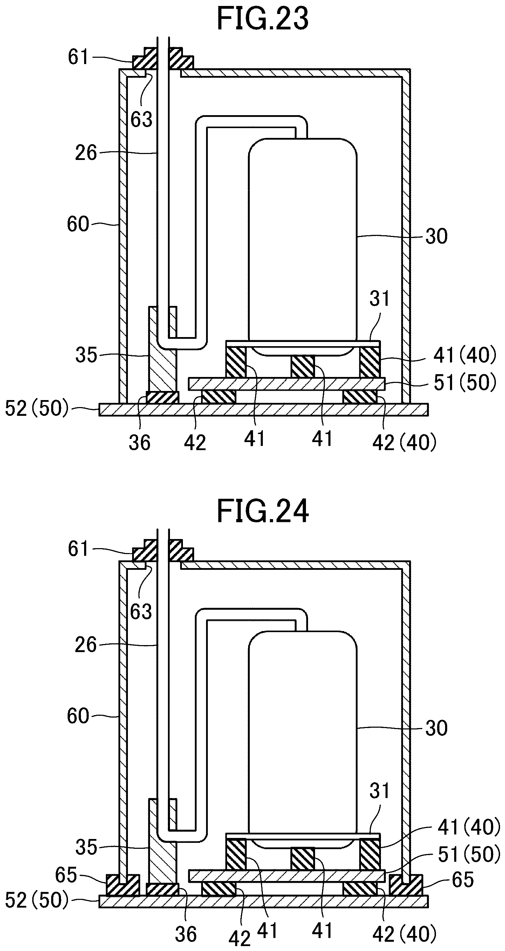

As illustrated in FIG. 23, a soundproof box (60) may be provided to cover the compressor (30).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the second support member (52).

The soundproof box (60) is formed in the shape of a box that opens downward. A pipe hole (63) is formed in an upper surface of the soundproof box (60). The pipe (26) of the compressor (30) is drawn out of the soundproof box (60) through the pipe hole (63). The soundproof box (60) is supported by the second support member (52).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the first variation of the fourth embodiment, the compressor (30) is covered with the soundproof box (60), keeping the radiated sound and the vibration sound caused by the compressor (30) from leaking outside.

### -Second Variation of Fourth Embodiment-

As illustrated in FIG. 24, the soundproof box (60) may be supported by a second elastic member (65).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the second support member (52).

The soundproof box (60) is supported by the second elastic member (65). The second elastic member (65) is made of, for example, rubber or urethane. The second elastic member (65) is supported by the second support member (52). The pipe (26) of the compressor (30) is drawn out of the soundproof box (60) through the pipe hole (63).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the second variation of the fourth embodiment, the second elastic member (65) reduces the vibration transmitted from the compressor (30) to the second support member (52), keeping the vibration from being transmitted to the soundproof box (60).

When the vibration of the soundproof box (60) is reduced, the pipe (26) passing through the pipe hole (63) is less likely to make contact with the soundproof box (60). Thus, the diameter of the pipe hole (63) can be reduced. This can reduce sound leakage from the pipe hole (63) of the soundproof box (60).

### -Third Variation of Fourth Embodiment-

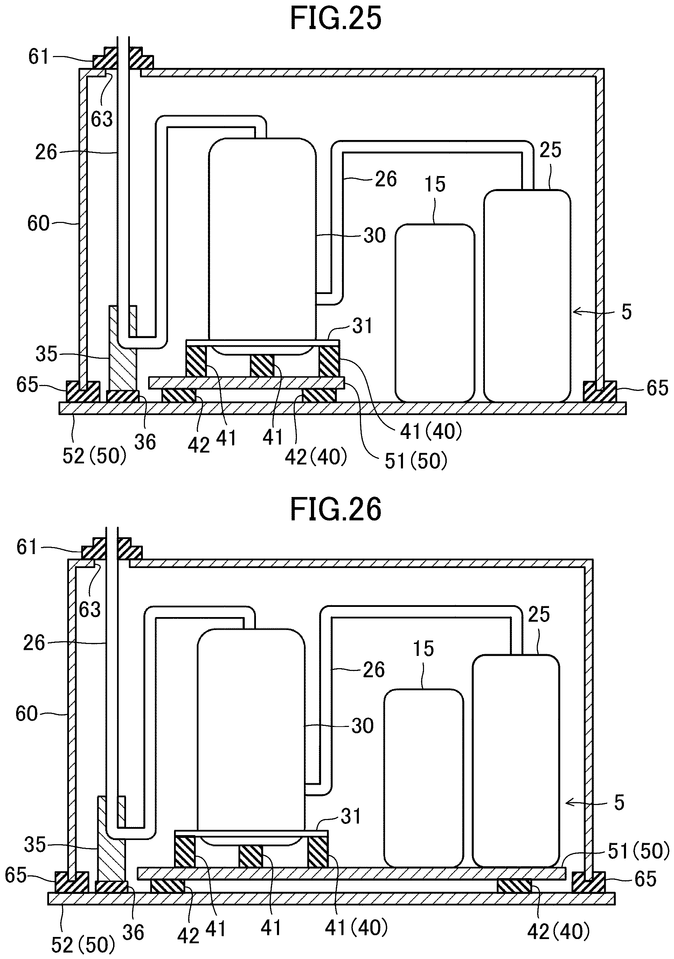

As illustrated in FIG. 25, components (5) of the refrigerant circuit (2) may be disposed in the soundproof box (60).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the second support member (52).

The components (5) of the refrigerant circuit (2) include the water heat exchanger (15) and the accumulator (25). The water heat exchanger (15) and the accumulator (25) are supported by the second support member (52). The accumulator (25) is connected to the compressor (30) by the pipe (26).

The pipe (26) connecting the compressor (30) and the accumulator (25) is covered with the soundproof box (60). The soundproof box (60) is supported by the second elastic member (65). The second elastic member (65) is supported by the second support member (52). The pipe (26) of the compressor (30) is drawn out of the soundproof box (60) through the pipe hole (63).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the third variation of the fourth embodiment, the components (5) of the refrigerant circuit (2) are disposed inside the soundproof box (60), keeping the sound of the refrigerant flowing through the refrigerant circuit (2) from leaking outside.

According to the features of the third variation of the fourth embodiment, the pipe (26) of the compressor (30) is disposed inside the soundproof box (60). Thus, even when the vibration sound is generated by the vibration transmitted from the compressor (30) to the pipe (26), the vibration sound can be kept from leaking outside.

### -Fourth Variation of Fourth Embodiment-

As illustrated in FIG. 26, the components (5) of the refrigerant circuit (2) may be supported by the first support member (51).

The support leg (31) of the compressor (30) is supported by the plurality of first vibration isolating members (41). The first vibration isolating members (41) are supported by the first support member (51). The first support member (51) is supported by the plurality of second vibration isolating members (42). The second vibration isolating members (42) are supported by the second support member (52).

The rigid member (35) is provided on the pipe (26) of the compressor (30). The rigid member (35) is supported by the first elastic member (36). The first elastic member (36) is supported by the second support member (52).

The components (5) of the refrigerant circuit (2) include the water heat exchanger (15) and the accumulator (25). The water heat exchanger (15) and the accumulator (25) are supported by the first support member (51). The accumulator (25) is connected to the compressor (30) by the pipe (26).

The pipe (26) connecting the compressor (30) and the accumulator (25) is covered with the soundproof box (60). The soundproof box (60) is supported by the second elastic member (65). The second elastic member (65) is supported by the second support member (52). The pipe (26) of the compressor (30) is drawn out of the soundproof box (60) through the pipe hole (63).

The first lid member (61) is attached to the pipe (26). The first lid member (61) is disposed on the upper surface of the soundproof box (60). The first lid member (61) closes the gap between the pipe (26) and the pipe hole (63). The first lid member (61) is movable along the upper surface of the soundproof box (60) as the pipe (26) vibrates.

According to the features of the fourth variation of the fourth embodiment, the components (5) of the refrigerant circuit (2) are disposed inside the soundproof box (60), keeping the sound of the refrigerant flowing through the refrigerant circuit (2) from leaking outside. Further, the overall weight of the structure supported by the vibration isolating member (40) is increased, improving the effect of damping the vibration.

According to the features of the fourth variation of the fourth embodiment, the pipe (26) of the compressor (30) is disposed inside the soundproof box (60). Thus, even when the vibration sound is generated by the vibration transmitted from the compressor (30) to the pipe (26), the vibration sound can be kept from leaking outside.

### <<Fifth Embodiment>>

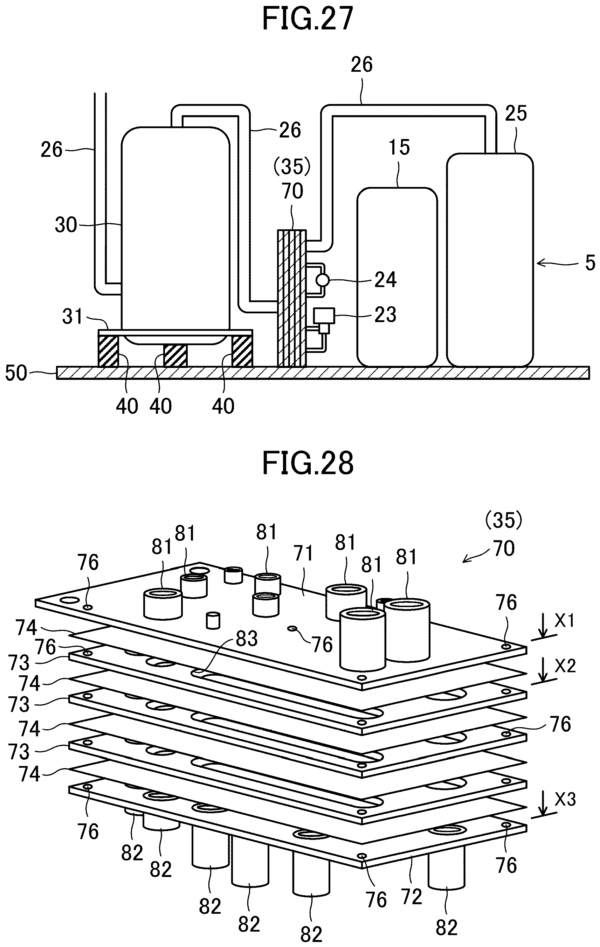

As illustrated in FIG. 27, the rigid member (35) includes a block pipe (70). The block pipe (70) is supported by the support member (50). The block pipe (70) is connected to pipes (26) for the outdoor expansion valve (23), the four-way switching valve (24), the accumulator (25), and the compressor (30).

As also illustrated in FIG. 28, the block pipe (70) is formed into a block by stacking a plurality of plates on each other. The block pipe (70) includes a first plate (71), a second plate (72), and a plurality of flow path plates (73).

The first plate (71) is stacked on the uppermost flow path plate (73) in FIG. 28. A sheet-shaped brazing material (74) is disposed between the first plate (71) and the flow path plate (73). The brazing material (74) is melted to join the first plate (71) and the flow path plate (73) together.

The flow path plates (73) are stacked on each other. A sheet-shaped brazing material (74) is disposed between each pair of the flow path plates (73). The brazing material (74) is melted to join the flow path plates (73) together.

The second plate (72) is stacked on the bottom of the lowermost flow path plate (73) in FIG. 28. A sheet-shaped brazing material (74) is disposed between the second plate (72) and the flow path plate (73). The brazing material (74) is melted to join the second plate (72) and the flow path plate (73) together.

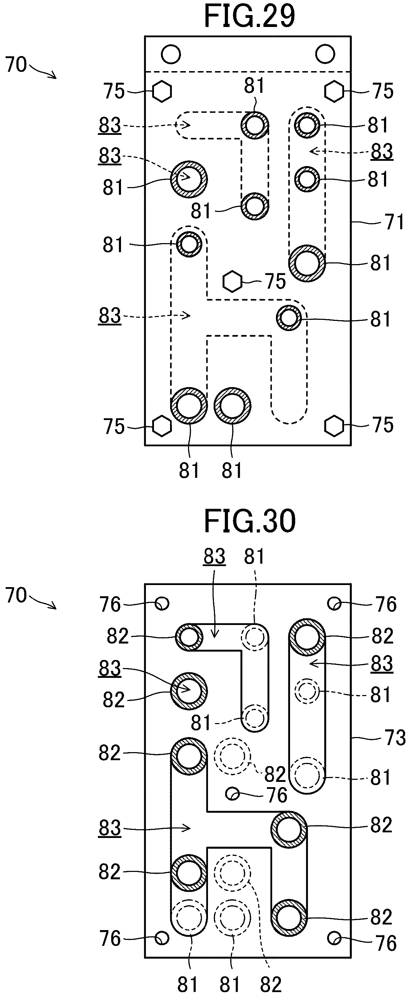

As illustrated in FIG. 29, the first plate (71) includes a plurality of first bushes (81). The first bushes (81) communicate with refrigerant flow paths (83) of the flow path plates (73) described later. The pipes (26) of the refrigerant circuit (2) are connected to the first bushes (81). The first plate (71) has a plurality of insertion holes (76) for passing bolts (75).

As illustrated in FIG. 30, each of the flow path plates (73) includes a plurality of refrigerant flow paths (83). The refrigerant flow paths (83) penetrate the flow path plate (73) in the stacking direction. The openings of the refrigerant flow paths (83) in the stacking direction are closed by the first plate (71) and the second plate (72). The features of the refrigerant flow paths (83), such as the shape, number, and arrangement shown in FIG. 30, are merely examples, and the present invention is not limited to this configuration. Each flow path plate (73) has a plurality of insertion holes (76) for passing the bolts (75).

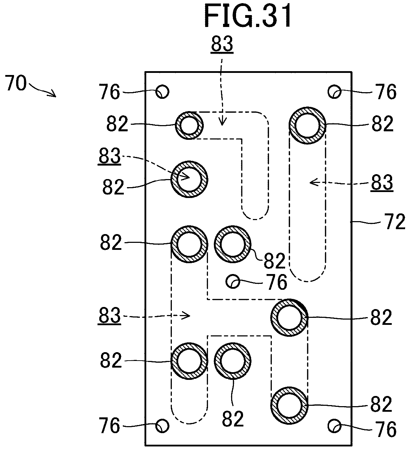

As illustrated in FIG. 31, the second plate (72) includes a plurality of second bushes (82). The second bushes (82) communicate with the refrigerant flow paths (83) of the flow path plates (73). The pipes (26) of the refrigerant circuit (2) are connected to the second bushes (82). The second plate (72) has a plurality of insertion holes (76) for passing the bolts (75).

The first plate (71), the flow path plates (73), and the second plate (72) are fastened together by tightening the bolts (75) inserted in the insertion holes (76) and nuts (not shown).

Thus, the block pipe (70) includes the first bushes (81) and the second bushes (82). The first bushes (81) and the second bushes (82) communicate with each other through the refrigerant flow paths (83). If any of the first bushes (81) and the second bushes (82) are not connected to the pipes (26), the unconnected first bushes (81) or second bushes (82) may be closed by plugs or any other members (not shown).

Thus, the pipes (26) for the various components disposed in the machine chamber (S1) can be integrated by connecting the pipes (26) to the single block pipe (70). This can reduce the number of pipes (26) without making the shape and branching of the pipes (26) complicated, improving the effect of integrating the pipes (26) in the machine chamber (S1), and facilitating the routing of the pipes (26).

### <<Verification of Vibration Reduction Effect>>

In the above-described embodiments and variations, the pipe (26) is provided with the rigid member (35) to reduce the vibration of the pipe (26). The simulation results of how much the vibration is reduced compared to the case without the rigid member (35) will be described below.

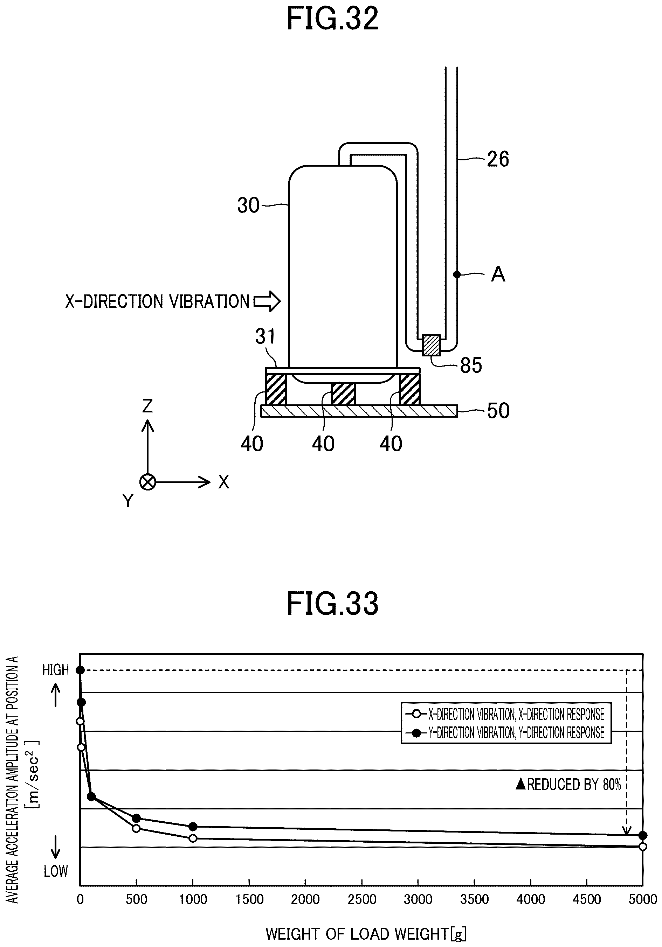

First, as illustrated in FIG. 32, a case where a load weight (85) is attached to the pipe (26) on the discharge side of the compressor (30) will be described. In FIG. 32, the X direction, the Y direction, and the Z direction are indicated by arrow lines.

In the example shown in FIG. 32, the pipe (26) on the discharge side of the compressor (30) extends upward from the top of the compressor (30), and then bends to extend to the right in FIG. 32. Then, the pipe (26) extends downward in FIG. 32 along the side surface of the compressor (30), bends and extends to the right, and then bends and extends upward.

Here, the load weight (85) is attached to a lower bent portion of the pipe (26). A portion of the pipe (26) downstream of the load weight (85) is regarded as a vibration calculation position A for calculating the vibration caused by the vibration of the compressor (30).

FIG. 33 is a graph showing the relationship between the weight of the load weight and the average acceleration amplitude at the position A. FIG. 33 indicates that the average acceleration amplitude at the position A with respect to the X-direction vibration and the Y-direction vibration was more reduced when the load weight (85) was attached to the pipe (26) than when the weight of the load weight was "zero", i.e., no load weight (85) was attached to the pipe (26).

For example, if the load weight (85) is 5 kg, the average acceleration amplitude at the position A with respect to the Y-direction vibration can be reduced by 80%.

This indicates that the vibration of the pipe (26) can be sufficiently reduced by attaching the load weight (85) to the pipe (26). However, if the load weight (85) is suspended from the pipe (26), a load is applied to the pipe (26) itself, which is not preferable.

Thus, in this embodiment, the rigid member (35) as the load weight (85) is supported by the support member (50) which is the bottom plate of the body casing (27) in order both to obtain the effect of reducing the vibration by providing the load weight (85) on the pipe (26) and to keep the load from being applied to the pipe (26) itself.

### <<Other Embodiments>>

The above embodiments may be modified as follows.

In this embodiment, the rigid member (35) is provided at some midpoint of the pipe (26), but the embodiment is not limited to this configuration. For example, the rigid member (35) may be a manifold having a flow path hole, and the pipe (26) may be connected to the flow path hole of the rigid member (35).

In this embodiment, the rigid member (35) is made of a block-shaped metal material, but the embodiment is not limited to this configuration. For example, the accumulator (25) arranged away from the compressor (30) may be used as the rigid member (35). Specifically, the pipe (26) on the discharge side of the compressor (30) may be fixed to a side surface of the accumulator (25) so that the accumulator (25) reduces the vibration transmitted from the compressor (30) to the pipe (26) on the discharge side.

While the embodiments and variations have been described above, it will be understood that various changes in form and details can be made without departing from the spirit and scope of the claims. The elements of the embodiments, the variations thereof, and the other embodiments may be combined and replaced with each other. In addition, the expressions of "first," "second," "third," . . . , in the specification and claims are used to distinguish the terms to which these expressions are given, and do not limit the number and order of the terms.

### INDUSTRIAL APPLICABILITY

As described above, the present disclosure is useful for a refrigeration cycle apparatus.

### DESCRIPTION OF REFERENCE CHARACTERS

- 1: Refrigeration Cycle Apparatus
- 2: Refrigerant Circuit
- 5: Component
- 25: Accumulator
- 26: Pipe
- 30: Compressor
- 35: Rigid Member
- 36: First Elastic Member
- 40: Vibration Isolating Member
- 41: First Vibration Isolating Member
- 42: Second Vibration Isolating Member
- 50: Support
- 51: First Support Member
- 52: Second Support Member
- 60: Soundproof Box
- 61: First Lid Member
- 62: Second Lid Member
- 63: Pipe Hole
- 65: Second Elastic Member
- 66: Sound Absorber
- 70: Block Pipe
- 81: First Bush
- 82: Second Bush
- 83: Refrigerant Flow Path

## Claims

1. A refrigeration cycle apparatus including a compressor (30) and a refrigerant circuit (2) to which the compressor (30) is connected, the refrigeration cycle apparatus comprising:
a vibration isolating member (40) configured to support the compressor (30);
a support member (50) configured to support the vibration isolating member (40); and
a rigid member (35) provided on a pipe (26) connected to the compressor (30),
wherein
the rigid member (35) is supported by the support member (50).

2. The refrigeration cycle apparatus of claim 1, further comprising:
a first elastic member (36) configured to support the rigid member (35),
wherein
the first elastic member (36) is supported by the second support member (50).

3. The refrigeration cycle apparatus of claim 1 or 2, wherein
the vibration isolating member (40) includes a first vibration isolating member (41) and a second vibration isolating member (42),
the support member (50) includes a first support member (51) and a second support member (52),
the compressor (30) is supported by the first vibration isolating member (41),
the first vibration isolating member (41) is supported by the first support member (51),
the first support member (51) is supported by the second vibration isolating member (42),
the second vibration isolating member (42) is supported by the second support member (52), and
the rigid member (35) is supported by the first support member (51) or the second support member (52).

4. The refrigeration cycle apparatus of claim 3, further comprising:
a first elastic member (36) configured to support the rigid member (35),
wherein
the first elastic member (36) is supported by the first support member (51) or the second support member (52).

5. The refrigeration cycle apparatus of claim 1, further comprising:
a soundproof box (60) configured to cover the compressor (30),
wherein
the soundproof box (60) is supported by the support member (50).

6. The refrigeration cycle apparatus of claim 5, further comprising:
a second elastic member (65) configured to support the soundproof box (60),
wherein
the second elastic member (65) is supported by the support member (50).

7. The refrigeration cycle apparatus of claim 3, further comprising:
a soundproof box (60) configured to cover the compressor (30),
wherein
the soundproof box (60) is supported by the first support member (51) or the second support member (52).

8. The refrigeration cycle apparatus of claim 7, further comprising:
a second elastic member (65) configured to support the soundproof box (60),
wherein
the second elastic member (65) is supported by the first support member (51) or the second support member (52).

9. The refrigeration cycle apparatus of any one of claims 5 to 8, wherein
the soundproof box (60) is provided with a pipe hole (63) through which the pipe (26) of the compressor (30) passes, and
the refrigeration cycle apparatus further comprises a first lid member (61) configured to be movable along a surface of the soundproof box (60) to close a gap between the pipe (26) and the pipe hole (63).

10. The refrigeration cycle apparatus of any one of claims 5 to 8, wherein
the soundproof box (60) is provided with a pipe hole (63) through which the pipe (26) of the compressor (30) passes, and
the refrigeration cycle apparatus further comprises a second lid member (62) configured to be fitted into the pipe hole (63) to close a gap between the pipe (26) and the pipe hole (63).

11. The refrigeration cycle apparatus of any one of claims 5 to 10, wherein
a component (5) of the refrigerant circuit (2) is disposed inside the soundproof box (60), and
the component (5) includes an accumulator (25).

12. The refrigeration cycle apparatus of any one of claims 5 to 11, wherein
a component (5) of the refrigerant circuit (2) is connected to the pipe (26) of the compressor (30), and
the pipe (26) is disposed inside the soundproof box (60).

13. The refrigeration cycle apparatus of any one of claims 5 to 12, wherein
the soundproof box (60) is provided with a sound absorber (66).

14. The refrigeration cycle apparatus of any one of claims 1 to 13, wherein
the rigid member (35) includes a block pipe (70), and
the block pipe (70) includes a plurality of first bushes (81) and a plurality of second bushes (82) to which the pipe (26) is connected, and a plurality of refrigerant flow paths (83) with which the plurality of first bushes (81) and the plurality of second bushes (82) communicate.
